# FASCICULE DE BREVET EUROPEEN

(11) **EP 4 069 583 B1**
(45) Date de publication et mention de la délivrance du brevet: **19.08.2026**
(21) Numéro de dépôt: 20817238.7
(22) Date de dépôt: 30.11.2020
(51) Int. Cl.: B64C 1/14, B64D 25/14

(54) **PORTE D'AERONEF A ESCAMOTAGE DES MOYENS DE RETENUE DU DISPOSITIF D'ÉVACUATION DÉPLOYABLE**
FLUGZEUGTÜR MIT RÜCKZUG DER MITTEL ZUM HALTEN DER ENTFALTBAREN EVAKUIERUNGSVORRICHTUNG
AIRCRAFT DOOR WITH RETRACTION OF THE MEANS FOR RETAINING THE DEPLOYABLE EVACUATION DEVICE

(30) Priorité: 06.12.2019 FR 1913846
(43) Date de publication de la demande: 12.10.2022
(73) Titulaire: Latecoere, 31500 Toulouse (FR)
(72) Inventeur: ROUZADE, Emmanuel, 31660 BESSIERES (FR)
(74) Mandataire: Junca, Eric
(86) Numéro de dépôt international: PCT/EP2020/083836
(87) Numéro de publication internationale: WO 2021/110572

(56) Documents cités:
- FR-A1- 2 576 217
- US-A1- 2002 043 807

## Description

### DOMAINE TECHNIQUE

L'invention concerne le domaine de l'aéronautique et vise plus particulièrement les portes d'aéronef munies d'un dispositif d'évacuation déployable.

Les aéronefs dont les portes d'accès sont situées à une hauteur significative par rapport au sol lorsque l'aéronef est posé, notamment la quasi-totalité des avions de ligne, sont généralement munis d'un dispositif d'évacuation déployable tel qu'un toboggan autogonflant monté sur l'ouvrant de la porte.

Ces portes d'aéronef comportent généralement des moyens de retenue du dispositif d'évacuation déployable, ces moyens de retenue étant adaptés à occuper deux positions : une position armée dans laquelle les moyens de retenue sont solidaires de l'encadrement, pour permettre le déclenchement et la fixation du dispositif d'évacuation déployable, en cas d'évacuation ; et une position désarmée dans laquelle les moyens de retenue sont librement mobiles par rapport à l'encadrement pour permettre l'ouverture de la porte dans les conditions normales de fonctionnement.

Les moyens de retenue associés au dispositif d'évacuation déployable remplissent ainsi deux fonctions :
- une première fonction dans laquelle ils exercent une traction sur le déclencheur du dispositif d'évacuation déployable lors de l'ouverture de la porte, ce qui commande le déploiement du dispositif d'évacuation ;
- une deuxième fonction dans laquelle ils rendent solidaire de l'encadrement de la porte le dispositif d'évacuation une fois déployé, pour permettre l'évacuation.

### ART ANTÉRIEUR

Les portes d'aéronef de l'art antérieur qui comportent un dispositif d'évacuation déployable telles que décrites dans la demande de brevet FR 2 576 217 A1 sont généralement munies d'une barre de retenue qui est reliée par un tablier au dispositif d'évacuation déployable. Une traction sur cette barre de retenue par rapport au dispositif d'évacuation déployable permet de déclencher le déploiement de ce dernier. Cette barre de retenue est adaptée à coopérer avec des mâchoires de seuil fixées sur l'encadrement de porte, au niveau du plancher de l'aéronef. La porte est verrouillée par un mouvement de descente de l'ouvrant par rapport à son encadrement, qui permet le verrouillage de butées présentes entre l'ouvrant et l'encadrement, et qui permet également le positionnement de la barre de retenue dans les mâchoires au niveau du seuil de porte.

Ces mâchoires de seuil sont par ailleurs munies d'un verrouillage permettant de refermer les mâchoires sur la barre de retenue. En position armée, les mâchoires sont verrouillées sur la barre de retenue et, en cas d'ouverture de la porte en vue d'une évacuation, la barre de retenue reste prise dans les mâchoires et le mouvement d'ouverture de la porte déclenche ainsi le déploiement du dispositif d'évacuation, ce dernier restant ensuite fixé à l'encadrement de porte par la barre de retenue toujours verrouillée dans les mâchoires. En position désarmée, le verrouillage des mâchoires n'est pas enclenché, et la barre de retenue est librement mobile par rapport aux mâchoires, au moins selon un mouvement de soulèvement. Dans cette position désarmée, lorsque la porte est déverrouillée par un mouvement de montée, (en vue de déverrouiller les butées présentes entre la porte et son encadrement), la barre de retenue s'extrait des mâchoires et la porte peut ensuite être ouverte normalement.

Ces portes d'aéronef de l'art antérieur présentent un certain nombre d'inconvénients.

Tout d'abord, ces portes nécessitent, pour le fonctionnement du dispositif d'évacuation déployable, d'être verrouillées et déverrouillées par un mouvement de descente ou de montée de l'ouvrant par rapport à son encadrement. Ces dispositifs nécessitent ainsi un mouvement vertical de la porte et ne peuvent être mis en œuvre avec des portes mises en œuvre selon un mouvement alternatif, ne comportant par exemple aucun mouvement dans la direction verticale.

Ces portes nécessitent de plus un dispositif mécanique complexe permettant d'actionner le verrouillage des mâchoires de seuil depuis un levier de commande monté sur l'ouvrant de la porte.

De plus, les mâchoires de seuil sont des éléments proéminents saillants par rapport au plancher de l'aéronef. Leurs possibilités de positionnement sont limitées à des emplacements en dehors du passage normalisé (« clear opening », en anglais), défini par la règlementation, destiné à la circulation des passagers. Le caractère saillant et proéminent des mâchoires entraine également des risques liés à l'accumulation de poussière, d'objets (pièces de monnaie, etc.) que les passagers peuvent laisser tomber dans les mâchoires et qui peuvent perturber le fonctionnement.

Par ailleurs, la structure d'un aéronef en vol subit généralement des mouvements entrainant des déplacements relatifs entre la porte et son plancher de seuil. La jonction entre la barre de maintien et les mâchoires de seuil doit donc être prévue avec de larges jeux admettant un tel mouvement relatif, ce qui entraine un surdimensionnement des mâchoires de seuil et un risque d'apparition de bruit mécanique intempestif sous l'effet de vibrations.

Il existe également des portes d'aéronef où le mouvement de désengagement des butées et d'ouverture est réalisé par une séquence de rotations autour de deux axes verticaux. De telles portes sont caractérisées par l'absence de mouvement vertical et présentent un important mouvement de rentrée à l'intérieur de l'aéronef lors de leur ouverture. L'engagement de la barre de retenue se fait soit manuellement soit au moyen d'un mécanisme à glissière. Une pièce intermédiaire supportant la barre de retenue est tantôt engagée par glissement sur l'encadrement (armé) ou sur l'ouvrant (désarmé). Dans les deux cas le déploiement du dispositif d'évacuation est engendré par la traction sur la barre de retenue lors de l'ouverture de la porte. L'engagement manuel de la barre de retenue n'est actuellement plus acceptable pour de nouveaux avions et le mécanisme associé à ce type de porte est complexe et très sensible au blocage.

### EXPOSÉ DE L'INVENTION

L'invention a pour but d'améliorer les portes d'aéronef de l'art antérieur.

À cet effet, l'invention vise une porte d'aéronef selon la revendication 1.

Un autre objet de l'invention vise un procédé d'ouverture d'une telle porte d'aéronef selon la revendication 12.

Une telle porte d'aéronef ne nécessite aucun élément proéminent disposé sur le seuil de porte de l'aéronef de sorte qu'aucun problème de sécurité, de blocage ou de sensibilité à l'accumulation de poussière ou autre nuisance n'est à craindre au niveau du seuil de porte. Le positionnement du deuxième organe de retenue peut ainsi être réalisé à l'endroit le plus optimal, éventuellement dans la zone de passage normalisée.

Les moyens permettant le déclenchement du dispositif d'évacuation déployable sont totalement indépendants des moyens de verrouillage de la porte d'aéronef sur son encadrement. Une telle porte d'aéronef peut ainsi être verrouillée ou déverrouillée par tout moyen, tel des mouvements de montée/descente classiques, mais également, par exemple, par des mouvements latéraux d'échappement de l'ouvrant par rapport à l'encadrement, ou encore des dispositifs de butées mobiles commandées. La porte d'aéronef équipée des moyens de retenue selon l'invention peut ainsi être mise en œuvre avec tous les types de moyens de verrouillage/déverrouillage.

De plus, les moyens de retenue, bien qu'ils soient armés, ne passent en position engagée que lorsque l'ouverture de la porte a effectivement lieu, et que cette ouverture soit suffisamment ample pour que le premier organe de retenue vienne s'associer au deuxième organe de retenue. Autrement dit, le déclenchement du dispositif d'évacuation déployable n'a lieu que lorsqu'un mouvement d'ouverture de la porte suffisamment ample a lieu, c'est-à-dire lorsque l'utilisateur a marqué son intention d'ouvrir la porte en déclenchant les moyens d'évacuation déployables. Un mouvement d'ouverture de la porte qui serait en deçà du point d'association du premier et du deuxième organes de retenue, autorise le retour en arrière en ramenant la porte en position fermée sans déclenchement du dispositif d'évacuation déployable. La porte d'aéronef garantit ainsi, même lorsqu'il est armé, une plage initiale d'ouverture de la porte (conditionnée par la longueur de la poutre) autorisant l'ouverture de la porte par erreur, sans conséquences.

L'invention va à l'encontre de la pratique courante dans le domaine de l'aéronautique consistant à armer les moyens de retenue en les enclenchant dans des mâchoires, lorsque l'avion est en vol, et à ne les désarmer que lorsque l'avion est au sol. Selon l'invention, les moyens de retenue, lorsqu'ils sont armés, peuvent présenter deux positions : une position armée et en attente d'engagement ; ou une position armée et engagée. Ainsi, durant le vol, les moyens de retenue sont armés mais sont en attente d'engagement tandis que les moyens d'escamotage sont quant à eux en position amorcée, de sorte qu'en cas d'ouverture de la porte, les moyens de retenue passent automatiquement en position engagée au-delà d'une certaine amplitude d'ouverture de la porte.

L'invention permet ainsi de rendre les moyens de retenue indépendants des mouvements relatifs entre la porte et le plancher lors du vol de l'aéronef.

La porte d'aéronef selon l'invention peut comporter les caractéristiques additionnelles suivantes, seules ou en combinaison :
- l'ouvrant comprend une structure de porte, et la poutre est fixée sur la structure de porte ;
- l'agrafe détachable comporte un élément de fixation élastiquement déformable du premier organe élastique sur la poutre ;
- l'agrafe détachable comporte un logement de fixation sur la poutre ainsi qu'une languette élastique, et le premier organe de retenue comporte une tête de fixation adaptée à être logée dans le logement de fixation et à être maintenue en place par la languette élastique ;
- le deuxième organe de retenue est monté sur une portion de seuil de l'encadrement de porte ;
- l'un du premier et deuxième organe de retenue comporte une barre de retenue et l'autre du premier et deuxième organe de retenue comporte un crochet couplable à la barre de retenue ;
- le crochet comporte un cliquet de maintien de la barre de retenue dans le crochet ;
- le deuxième organe de retenue est mobile entre une position saillante et une position escamotée, les moyens d'escamotage étant associés au deuxième organe de retenue de sorte que la position amorcée des moyens d'escamotage entraine la position saillante du deuxième organe de retenue et la position désamorcée des moyens d'escamotage entraine la position escamotée du deuxième organe de retenue ;
- les moyens d'escamotage comportent un châssis et un axe de pivotement sur lequel le deuxième organe de retenue est monté pivotant entre sa position escamotée et sa position saillante ;
- les moyens d'escamotage comportent un moyen élastique repoussant le deuxième organe de retenue dans sa position stable saillante ou escamotée ;
- la porte comprend deux ensembles de retenue disposés de part et d'autre de l'ouvrant.

### PRÉSENTATION DES FIGURES

D'autres caractéristiques et avantages de l'invention ressortiront de la description non limitative qui suit, en référence aux dessins annexés dans lesquels :
[Fig.1] La figure 1 est une représentation partielle d'une porte selon l'invention ;
[Fig.2] La figure 2 est une vue en perspective d'un ensemble de retenue de la porte de la figure 1, dans une première position, les moyens d'escamotage étant en position amorcée ;
[Fig.3] La figure 3 est une vue de profil de la figure 2 ;
[Fig.4] La figure 4 est une vue en perspective de l'ensemble de retenue dans une deuxième position, les moyens d'escamotage étant en position amorcée ;
[Fig.5] La figure 5 est une vue de profil de la figure 4 ;
[Fig.6] La figure 6 est une vue en perspective de l'ensemble de retenue dans une troisième position, les moyens d'escamotage étant en position amorcée ;
[Fig.7] La figure 7 est une vue de profil de la figure 6 ;
[Fig.8] La figure 8 est une vue en perspective de l'ensemble de retenue dans une quatrième position, les moyens d'escamotage étant en position amorcée ;
[Fig.9] La figure 9 est une vue de profil de la figure 8 ;
[Fig.10] La figure 10 est une vue en perspective de l'ensemble de retenue dans une première position, les moyens d'escamotage étant en position désamorcée ;
[Fig.11] La figure 11 est une vue de profil de la figure 10 ;
[Fig.12] La figure 12 est une vue en perspective de l'ensemble de retenue dans une deuxième position, les moyens d'escamotage étant en position désamorcée ;
[Fig.13] La figure 13 est une vue de profil de la figure 12 ;
[Fig.14] La figure 14 est une vue en perspective de l'ensemble de retenue dans une troisième position, les moyens d'escamotage étant en position désamorcée ;
[Fig.15] La figure 15 est une vue de profil de la figure 14.

### DESCRIPTION DÉTAILLÉE

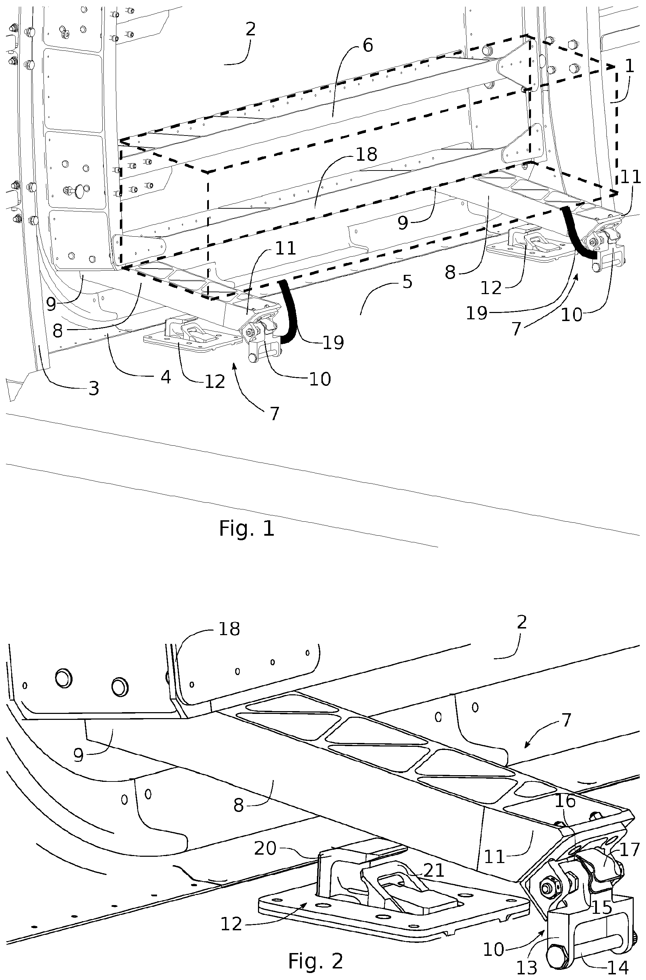

La figure 1 représente en perspective une portion de porte d'aéronef selon l'invention. Cette vue illustrative représente le bas de la porte d'aéronef en place dans le fuselage 1 d'un aéronef.

La porte d'aéronef comprend un ouvrant 2 et un encadrement 3. Sur la figure 1, la porte est représentée en position fermée. La porte est par ailleurs adaptée à occuper une position ouverte dans laquelle l'ouvrant 2 est dégagé de l'encadrement 3. La porte comprend à cet effet un mécanisme de verrouillage/déverrouillage et d'ouverture/fermeture qui n'est pas l'objet de l'invention et ne sera donc pas décrit plus en détail ici. Ces mécanismes connus rendent l'ouvrant 2 mobile entre la position de fermeture représentée à la figure 1 et une position d'ouverture où l'ouvrant 2 est déplacé contre l'extérieur du fuselage en laissant libre le passage ouvert par l'encadrement 3.

L'encadrement 3 est formé d'une structure disposée autour de l'ouvrant 2 et fixée sur le fuselage 1 de l'aéronef. Cet encadrement 3 comporte également une portion de seuil 4 s'étendant sous le plancher 5 de l'aéronef.

La porte d'aéronef comprend un dispositif d'évacuation déployable 6, tel qu'un toboggan autogonflant, monté sur l'ouvrant 2 (représenté schématiquement en pointillés sur la figure 1).

La porte d'aéronef comprend de plus des moyens de retenue reliés au dispositif d'évacuation déployable 6 pour permettre son déclenchement et sa fixation sur l'encadrement 3 de la porte. Ces moyens de retenue comprennent ici deux ensembles de retenue 7 identiques.

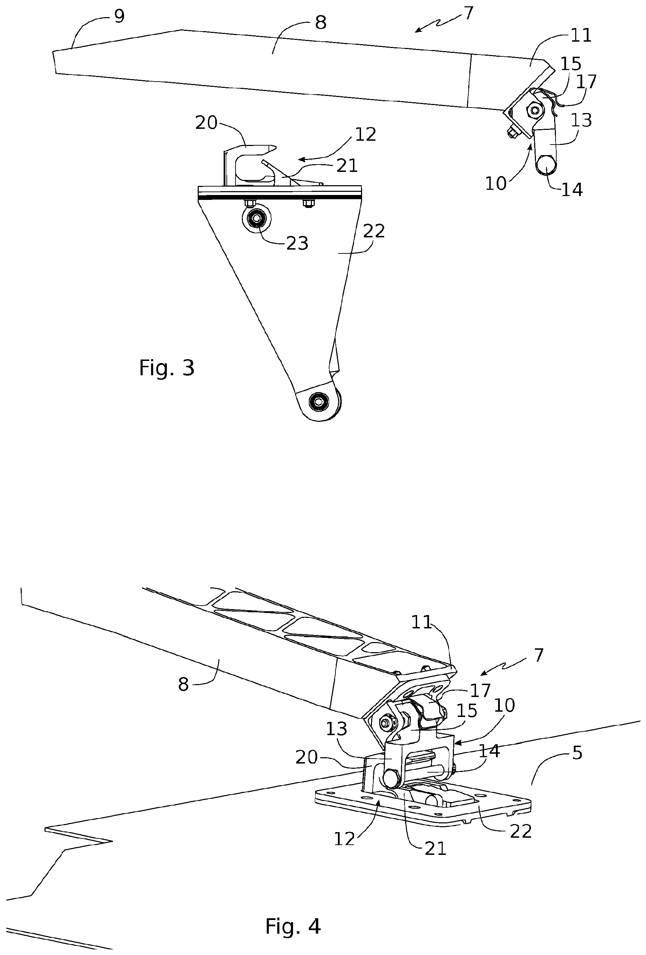

La figure 2 est une vue agrandie d'une portion de la figure 1 et représente l'un des ensembles de retenue 7 plus en détail. La figure 3 est une vue de profil de l'ensemble de retenue 7 représentées à la figure 2. Chacun des ensembles de retenue 7 comporte :
- une poutre 8 dont l'une des extrémités 9 est fixée sur l'ouvrant 2 ;
- un premier organe de retenue 10 fixé sur une deuxième extrémité 11 de la poutre 8 ;
- un deuxième organe de retenue 12 fixé, dans le présent exemple, sur la portion de seuil 4 de l'encadrement 3.

Sur la figure 3, le plancher 5 de l'aéronef n'a pas été représenté, ce qui rend visible le châssis 22 supportant le deuxième organe de retenue 12.

Dans le présent exemple, le premier organe de retenue 10 est constitué d'une chape 13 supportant une barre de retenue 14 qui s'étend sensiblement orthogonalement à la direction dans laquelle s'étend la poutre 8. Le premier organe de retenue 10 comporte également une tête de fixation 15 qui est insérée dans un logement de fixation 16 solidaire de la deuxième extrémité 11 de la poutre 8. La tête de fixation 15 est maintenue à l'intérieur du logement de fixation 16 par un moyen de maintien élastique qui est ici constitué d'une languette élastique 17. Le logement de fixation 16 et la languette élastique 17 constituent ainsi une agrafe détachable pour la fixation du premier organe de retenue 10 sur la poutre 8. Cette agrafe formée par le logement de fixation 16 et la languette élastique 17 est dite détachable car si un effort de traction suffisant est exercé sur la barre de retenue 14, le premier organe de retenue 10 se détache de la poutre 8. Dans cet exemple, l'agrafe détachable est solidaire de la poutre 8 et reçoit le premier organe de retenue 10 en permettant son détachement. En variante, l'agrafe détachable peut être solidaire du premier organe de retenue 10 et permettre le détachement de ce dernier par rapport à la poutre 8.

Le premier organe de retenue 10 est de plus relié au dispositif d'évacuation déployable 6 par des sangles 19 (voir figure 1).

La poutre 8 est fixée sur l'ouvrant 2 de sorte que la poutre 8 s'étende sensiblement perpendiculairement à l'ouvrant 2. Dans le présent exemple, l'ouvrant 2 comporte un ensemble de poutres de renfort 18 (voir figure 1) et la poutre 8 est fixée sur l'une de ces poutres 18. La poutre 8 est dite sensiblement perpendiculaire à l'ouvrant 2 dans la mesure où cette poutre 8 s'étend transversalement à l'ouvrant 2, selon des angles proches de 80° à 100°.

Le deuxième organe de retenue 12 comporte un crochet 20 et un cliquet 21. Le deuxième organe de retenue 12 est complémentaire du premier organe de retenue 10, car la barre de retenue 14 est adaptée à venir se loger dans le crochet 20.

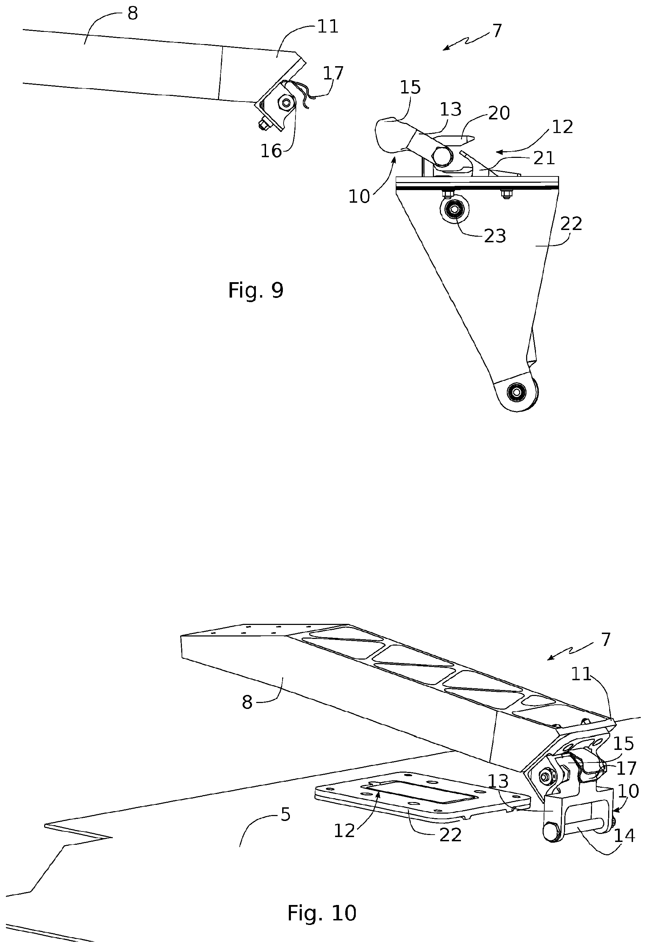

Les ensembles de retenue 7, comportent de plus chacun des moyens d'escamotage du deuxième organe de retenue 12, mobiles entre une position amorcée dans laquelle le deuxième organe de retenue 12 est saillant par rapport au plancher 5 de l'aéronef (position visible aux figures 1 à 3), et une position désamorcée dans laquelle le deuxième organe de retenue 12 est escamoté dans le plancher 5 de l'aéronef (voir figure 10).

Dans la position de la figure 1, les moyens de retenue du dispositif d'évacuation déployable 6 sont en position désarmée, car le premier organe de retenue 10 est librement mobile par rapport au deuxième organe de retenue 12. Cependant, les moyens d'escamotage sont en position amorcée. Cette configuration correspond par exemple à la configuration de vol de l'aéronef, dans laquelle le déploiement du dispositif d'évacuation déployable 6 est requis en cas d'ouverture de la porte.

À partir de cette configuration des figures 1 à 3, les séquences d'ouverture de la porte qui vont donc déclencher le dispositif d'évacuation déployable 6 vont maintenant être décrites en référence aux figures 4 à 9.

La position amorcée des moyens d'escamotage conduit au positionnement du crochet 20 sur la trajectoire de la barre de retenue 14 lors de l'ouverture de la porte. Dans cet exemple, l'ouverture de la porte entraine un mouvement de l'ouvrant 2 vers l'extérieur du fuselage 1.

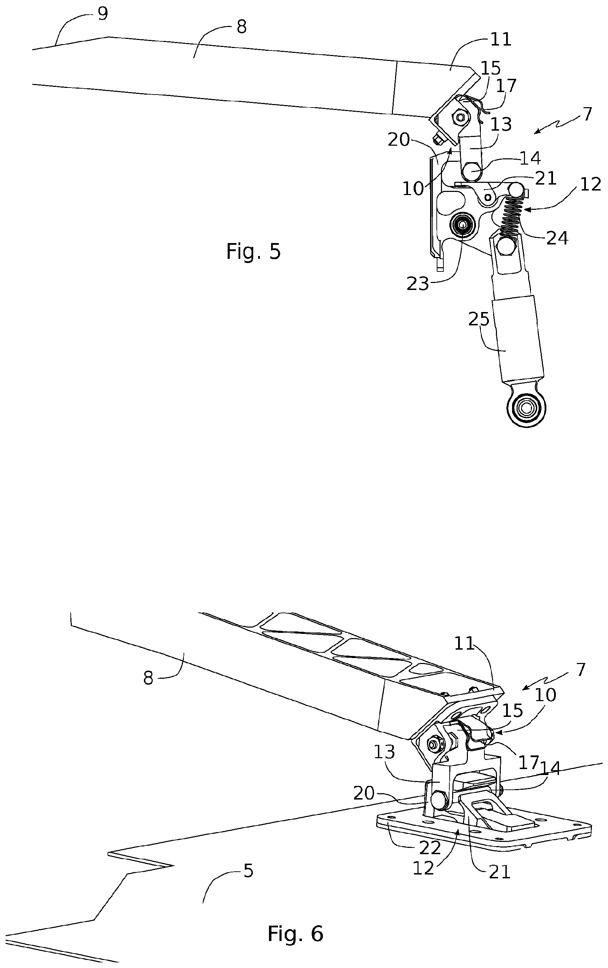

Durant ce mouvement, la trajectoire de l'ouvrant 2 entraine un déplacement du premier organe de retenue 10 par rapport au deuxième organe de retenue 12 jusqu'à la rencontre de la barre de retenue 14 avec le cliquet 21 (position représentée aux figures 4 et 5). Les figures 4 et 5 représentent, respectivement en perspective et de profil, cette position où la barre de retenue 14 vient repousser le cliquet 21.

La figure 5 représente le deuxième organe de retenue 12 dépourvu de son châssis 22, ce qui rend visible les éléments internes du deuxième organe de retenue 12. Le deuxième organe de retenue 12 comporte ainsi un axe de pivotement 23 par lequel le crochet 20 est monté tournant sur le châssis 22. Le cliquet 21 est quant à lui monté mobile en rotation sur le crochet 20 et ferme l'entrée du crochet 20 grâce à un ressort de rappel 24. Un vérin à gaz 25 joue un rôle de ressort et permet de maintenir le crochet 20 dans ses deux positions stables (saillant comme sur la figure 5 ou escamoté).

Entre les positions des figures 1 à 3 et celle des figures 4 et 5, la porte d'aéronef présente une plage de mouvement d'ouverture de l'ouvrant 2 dans laquelle les moyens de retenue restent en attente d'engagement, bien que les moyens de retenue soient déjà armés. Dans cette plage, l'ouvrant 2 peut donc être refermé (au cas où, par exemple, il ait été ouvert par erreur) sans que les moyens de retenue, bien qu'ils soient armés, ne soient passés en position engagée et donc sans risque de déclencher le dispositif d'évacuation déployable 6.

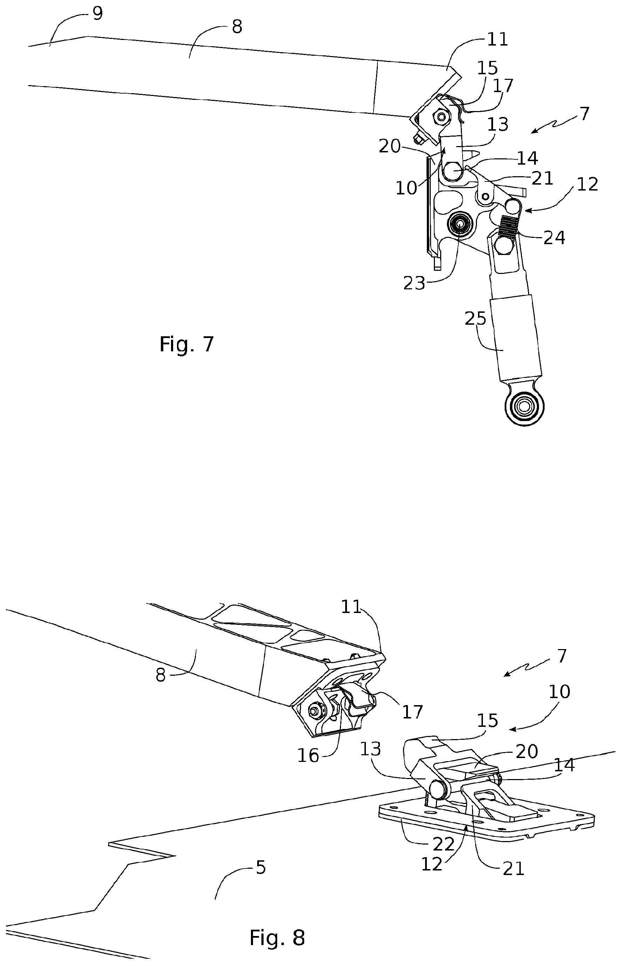

Les figures 6 et 7 représentent, respectivement en perspective et de profil, la position dans laquelle la barre de retenue 14 est prise dans le crochet 20, position qui intervient lorsque le mouvement d'ouverture se poursuit. Le cliquet 21 est revenu en place et empêche une désolidarisation du premier organe de retenue 10 et du deuxième organe de retenue 12. Cette position des figures 6 et 7 correspond à un passage automatique des moyens de retenue en position engagée.

La poursuite de l'ouverture de la porte conduit ensuite à la position illustrée aux figures 8 et 9 représentant l'ensemble de retenue respectivement en perspective et de profil. À partir de la position des figures 6 et 7, la barre de retenue 14 reste prise dans le crochet 20 et la poursuite du mouvement conduit à une traction sur l'attache 16, 17 entrainant un détachement du premier organe de retenue 10 et de la poutre 8. L'effort de traction entre la poutre 8 et le premier organe de retenue 10 conduit en effet à la déformation élastique de la languette élastique 17 de sorte que la tête de fixation 15 est extraite du logement de fixation 16.

La poursuite du mouvement d'ouverture, au-delà de la position des figures 8 et 9, conduit alors à l'ouverture de la porte tandis que le premier organe de retenue 10 reste solidaire du deuxième organe de retenue 12, et donc de l'encadrement 3. Le premier organe de retenue 10 étant relié au dispositif d'évacuation déployable 6 par la sangle 19 (non représentée sur les figures 2 à 15), le mouvement de l'ouvrant qui embarque le dispositif d'évacuation déployable entraine une traction de la sangle 19 sur le déclencheur, et entraine donc le déclenchement du dispositif d'évacuation déployable.

La liaison entre le dispositif d'évacuation déployable 6 et l'encadrement 3 est donc réalisée par le premier organe de retenue 10 qui est maintenu solidaire du deuxième organe de retenue 12.

Les moyens d'escamotage du deuxième organe de retenue 12 comprennent, dans le présent exemple, le châssis 22 et l'axe de pivotement 23, le vérin à gaz 25 et d'éventuels moyens de commande (non représentés) permettant le basculement du crochet 20 entre ses deux positions : saillante et escamotée. Ces moyens de commande peuvent être réalisés par tout moyen mécanique et/ou électrique adapté à entrainer le pivotement du crochet 20 tels que, par exemple, un moteur électrique, une crémaillère, un système de levier et de came, etc. Ces moyens d'escamotage sont actionnés lorsqu'il est question de configurer le deuxième organe de retenue 12 dans l'une de ses positions :
- saillante, qui entraine le passage en position engagée des moyens de retenue automatiquement lors de l'ouverture de la porte et uniquement lors de l'ouverture de la porte, les moyens de retenue étant en position armée mais en attente d'engagement tant que la porte n'a pas été manipulée ;
- escamotée, qui permet une libre ouverture de la porte, en maintenant les moyens de retenue en position désarmée, et donc sans déclenchement du dispositif d'évacuation déployable 6.

La configuration d'ouverture de la porte en fonctionnement normal, dans laquelle les moyens d'escamotage sont en position désamorcée, va maintenant être décrite en référence aux figures 10 à 15. Cette position désamorcée des moyens d'escamotage correspond à une situation d'ouverture normale de la porte d'aéronef au sol, c'est-à-dire en présence des équipements aéroportuaires destinés à l'embarquement et au débarquement des passagers. L'équipage actionne alors les moyens d'escamotage dans leur position désamorcée, ce qui conduit, dans le présent exemple, à maintenir le deuxième organe de retenue 12 dans sa position escamotée.

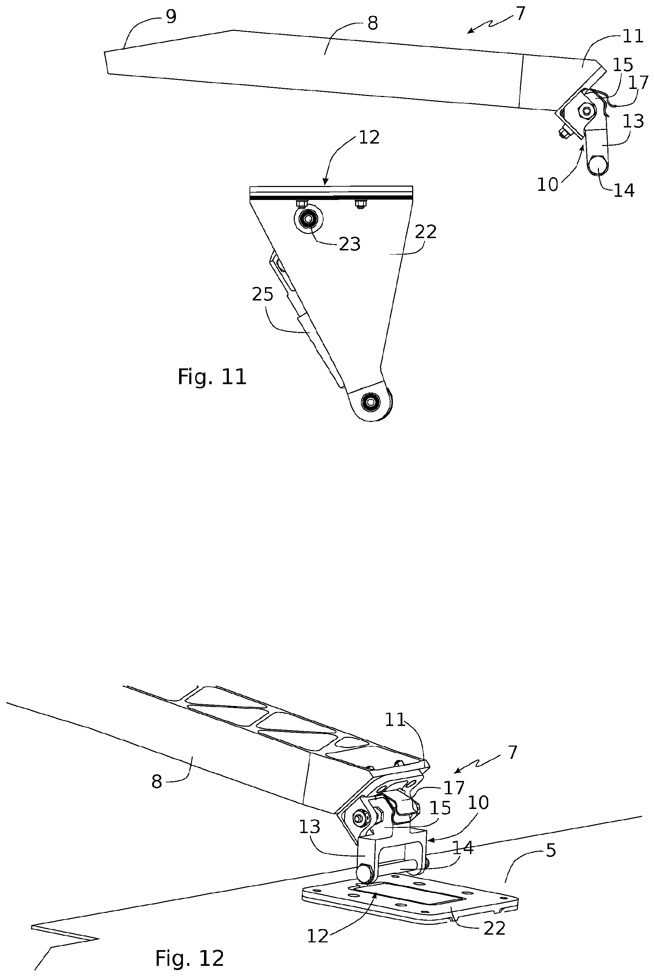

La figure 10 et 11 sont des vues similaires respectivement aux figures 2 et 3, si ce n'est que les moyens d'escamotage sont dans leur position désamorcée. Dans cette configuration, les moyens de retenue restent en position désarmée et ne passeront pas automatiquement en position engagée lors de l'ouverture de la porte.

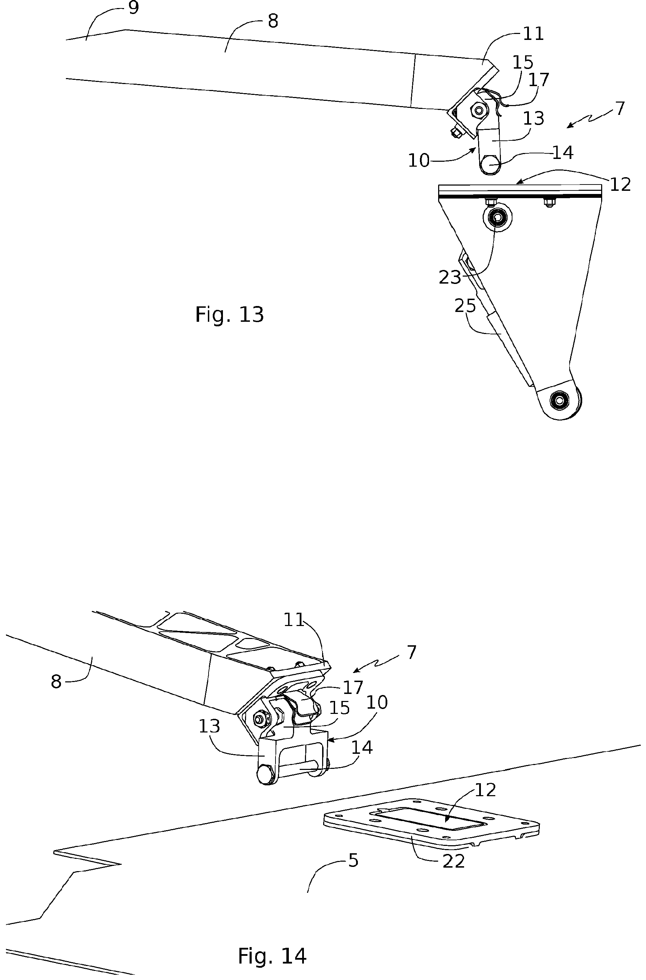

À partir des positions des figures 10 et 11, un mouvement d'ouverture de l'ouvrant 2 entraine un déplacement de la poutre 8 jusqu'à la position des figures 12 et 13. Dans cette configuration, le deuxième organe de retenue 12, qui est en position escamotée, n'est plus sur la trajectoire du premier organe de retenue 10 et la barre de retenue 14 passe en vis-à-vis du deuxième organe de retenue 12 sans interagir avec ce dernier.

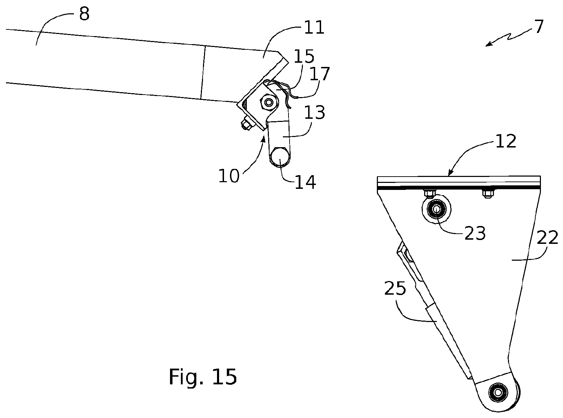

Le mouvement d'ouverture de la porte se poursuit ensuite jusqu'à la position des figures 14 et 15 dans lesquelles l'ouvrant 2 s'ouvre sans que le dispositif d'évacuation déployable 6 ne soit déclenché.

Des variantes de réalisation de la porte d'aéronef peuvent être mises en œuvre sans sortir du cadre de l'invention. Notamment, l'agrafe détachable peut être réalisée par tout autre moyen, par exemple par un assemblage avec goupille sécable, permettant une fixation du premier organe de retenue 10 sur la poutre 8, en étant détachable lorsqu'une force de traction supérieure à un seuil prédéterminé est appliquée à l'organe de retenue 10.

De même, les moyens d'accouplement entre les premier et deuxième organes de retenue peuvent être réalisés différemment, le premier organe de retenue peut être muni d'un crochet et le deuxième organe de retenue peut être muni d'une barre de retenue, par exemple, ou tout autre configuration de moyens d'accouplement.

Par ailleurs, l'exemple décrit précédemment vise un deuxième organe de retenue 12 qui est escamotable dans le plancher de l'aéronef. Cependant, il est également possible de prévoir que les moyens d'escamotage agissent sur le premier organe de retenue 10, par exemple en le repliant contre la poutre, de sorte que la position amorcée entraine un déploiement du premier organe de retenue, et que la position désamorcée entraine son repli. Le deuxième organe de retenue est ainsi présent ou non sur la trajectoire du premier organe de retenue lors de l'ouverture de la porte. Dans un tel exemple, le deuxième organe de retenue et son crochet sont donc fixes. Ce crochet fixe est davantage saillant que le crochet escamotable décrit en exemple, cependant son encombrement reste fortement réduit par rapports aux mâchoires proéminentes de l'art antérieur.

## Revendications

1. Porte d'aéronef comportant :
- un encadrement (3) de porte, ayant une portion de seuil pour s'étendre sous un plancher (5) ;
- un ouvrant (2) présentant une face interne destinée à être tournée vers l'intérieur de l'aéronef, l'ouvrant (2) étant mobile par rapport à l'encadrement (3) entre une position fermée et une position ouverte ;
- un dispositif d'évacuation déployable (6) monté sur l'ouvrant (2);
- des moyens de retenue comprenant au moins un ensemble de retenue (7) comportant un premier organe de retenue (10) relié au dispositif d'évacuation déployable (6) et un deuxième organe de retenue (12), couplable au premier organe de retenue (10), monté sur l'encadrement (3) de porte, lesdits moyens de retenue étant adaptés à occuper : une position armée et engagée dans laquelle le premier organe de retenue (10) des moyens de retenue sont solidaires du deuxième organe de retenue monté sur l'encadrement (3) et une position désarmée dans laquelle le premier organe de retenue (10) des moyens de retenue sont librement mobiles par rapport au deuxième organe de retenue (12) monté sur l'encadrement (3) ;cette porte d'aéronef étant **caractérisée en ce que** chaque ensemble de retenue (7) comporte :
- une poutre (8) comportant une première extrémité (9) fixée sur la face interne de l'ouvrant (2) et une deuxième extrémité (11) sur laquelle est fixée de manière détachable le premier organe de retenue (1) par une agrafe (16, 17), cette poutre (8) s'étendant sensiblement perpendiculairement à l'ouvrant (2) ;
- des moyens d'escamotage (22, 23, 25) du deuxième organe de retenue (12) mobiles entre : une position amorcée dans laquelle le deuxième organe de retenue (12) est saillant par rapport au plancher (5) sur la trajectoire du premier organe de retenue (10) lorsque l'ouvrant (2) passe de sa position fermée à sa position ouverte ; et une position désamorcée dans laquelle le deuxième organe de retenue (12) est escamoté dans le plancher en dehors de la trajectoire du premier organe de retenue (10) lorsque l'ouvrant (2) passe de sa position fermée à sa position ouverte.

2. Porte d'aéronef selon la revendication 1, **caractérisée en ce que** l'ouvrant (2) comprend une structure de porte (18), et **en ce que** la poutre (8) est fixée sur la structure de porte (18).

3. Porte d'aéronef selon l'une quelconque des revendications précédentes, **caractérisée en ce que** l'agrafe comporte un élément de fixation élastiquement déformable (17) du premier organe élastique (10) sur la poutre (8).

4. Porte d'aéronef selon la revendication 3, **caractérisée en ce que** l'agrafe comporte un logement de fixation (16) sur la poutre (8) ainsi qu'une languette élastique (17), et **en ce que** le premier organe de retenue (10) comporte une tête de fixation (15) adaptée à être logée dans le logement de fixation (16) et à être maintenue en place par la languette élastique (17).

5. Porte d'aéronef selon l'une quelconque des revendications précédentes, **caractérisée en ce que** le deuxième organe de retenue (12) est monté sur une portion de seuil (4) de l'encadrement (3) de porte.

6. Porte d'aéronef selon l'une quelconque des revendications précédentes, **caractérisée en ce que** l'un du premier (10) et deuxième (12) organe de retenue comporte une barre de retenue (14) et l'autre du premier (10) et deuxième (12) organe de retenue comporte un crochet (20) couplable à la barre de retenue (14).

7. Porte d'aéronef selon la revendication 6, **caractérisée en ce que** le crochet (20) comporte un cliquet (21) de maintien de la barre de retenue (14) dans le crochet (20).

8. Porte d'aéronef selon l'une quelconque des revendications précédentes, **caractérisée en ce que** le deuxième organe de retenue (12) est mobile entre une position saillante et une position escamotée, les moyens d'escamotage étant associés au deuxième organe de retenue (12) de sorte que la position amorcée des moyens d'escamotage entraine la position saillante du deuxième organe de retenue (12) et la position désamorcée des moyens d'escamotage entraine la position escamotée du deuxième organe de retenue (12).

9. Porte d'aéronef selon la revendication 8, **caractérisée en ce que** les moyens d'escamotage comportent un châssis (22) et un axe de pivotement (23) sur lequel le deuxième organe de retenue (12) est monté pivotant entre sa position escamotée et sa position saillante.

10. Porte d'aéronef selon la revendication 9, **caractérisée en ce que** les moyens d'escamotage comportent un moyen élastique (25) repoussant le deuxième organe de retenue (12) dans sa position stable saillante ou escamotée.

11. Porte d'aéronef selon l'une quelconque des revendications précédentes, **caractérisée en ce qu'**elle comporte deux ensembles de retenue (7) disposés de part et d'autre de l'ouvrant (2).

12. Procédé d'ouverture de la porte d'aéronef selon l'une des revendications précédentes, **caractérisé en ce qu'**il comporte les étapes suivantes :
- placer les moyens d'escamotage en position amorcée ;
- entrainer l'ouvrant (2) dans un mouvement d'ouverture selon une première course dans laquelle le premier organe de retenue (10) est entrainé jusqu'à rencontrer le deuxième organe de retenue (12) ;
- poursuivre le mouvement d'ouverture de l'ouvrant (2) selon une deuxième course dans laquelle le premier organe de retenue (10) reste maintenu accouplé au deuxième organe de retenue (12) et se détache de la poutre (8).

## Patentansprüche

1. Flugzeugtür, welche umfasst:
- einen Türrahmen (3) mit einem Schwellenabschnitt, der sich unter einem Fußboden (5) erstreckt;
- ein Öffnungselement (2), das eine Innenseite aufweist, die dazu bestimmt ist, dem Inneren des Flugzeugs zugewandt zu sein, wobei das Öffnungselement (2) in Bezug auf den Rahmen (3) zwischen einer geschlossenen Position und einer geöffneten Position beweglich ist;
- eine ausfahrbare Evakuierungsvorrichtung (6), die an dem Öffnungselement (2) angebracht ist;
- Haltemittel, die mindestens eine Halteanordnung (7) umfassen, die ein erstes Halteorgan (10), das mit der ausfahrbaren Evakuierungsvorrichtung (6) verbunden ist, und ein mit dem ersten Halteorgan (10) koppelbares zweites Halteorgan (12), das an dem Türrahmen (3) angebracht ist, aufweist, wobei die Haltemittel dazu eingerichtet sind einzunehmen: eine gespannte und eine Eingriffsposition darstellende Position, in der das erste Halteorgan (10) der Haltemittel mit dem am Rahmen (3) angebrachten zweiten Halteorgan fest verbunden ist, und eine entspannte Position, in der das erste Halteorgan (10) der Haltemittel in Bezug auf das am Rahmen (3) angebrachte zweite Halteorgan (12) frei beweglich ist; wobei die Flugzeugtür **dadurch gekennzeichnet ist, dass** jede Halteanordnung (7) aufweist:
- einen Träger (8), der ein erstes Ende (9), das an der Innenseite des Öffnungselements (2) befestigt ist, und ein zweites Ende (11), an dem das erste Halteorgan (1) durch eine Klammer (16, 17) lösbar befestigt ist, aufweist, wobei sich dieser Träger (8) im Wesentlichen senkrecht zu dem Öffnungselement (2) erstreckt;
- Mittel zum Rückzug (22, 23, 25) des zweiten Halteorgans (12), die beweglich sind zwischen: einer ausgelösten Position, in der das zweite Halteorgan (12) in Bezug auf den Fußboden (5) auf der Trajektorie des ersten Halteorgans (10) vorstehend ist, wenn das Öffnungselement (2) aus seiner geschlossenen Position in seine geöffnete Position übergeht; und einer nicht ausgelösten Position, in der das zweite Halteorgan (12) in den Fußboden außerhalb der Trajektorie des ersten Halteorgans (10) zurückgezogen ist, wenn das Öffnungselement (2) aus seiner geschlossenen Position in seine geöffnete Position übergeht.

2. Flugzeugtür nach Anspruch 1, **dadurch gekennzeichnet, dass** das Öffnungselement (2) eine Türstruktur (18) aufweist, und dadurch, dass der Träger (8) an der Türstruktur (18) befestigt ist.

3. Flugzeugtür nach einem der vorhergehenden Ansprüche, **dadurch gekennzeichnet, dass** die Klammer ein elastisch verformbares Element (17) zur Befestigung des ersten elastischen Organs (10) an dem Träger (8) aufweist.

4. Flugzeugtür nach Anspruch 3, **dadurch gekennzeichnet, dass** die Klammer einen Befestigungssitz (16) am Träger (8) sowie eine elastische Zunge (17) aufweist, und dadurch, dass das erste Halteorgan (10) einen Befestigungskopf (15) aufweist, der dazu eingerichtet ist, in dem Befestigungssitz (16) aufgenommen und von der elastischen Zunge (17) festgehalten zu werden.

5. Flugzeugtür nach einem der vorhergehenden Ansprüche, **dadurch gekennzeichnet, dass** das zweite Halteorgan (12) an einem Schwellenabschnitt (4) des Türrahmens (3) angebracht ist.

6. Flugzeugtür nach einem der vorhergehenden Ansprüche, **dadurch gekennzeichnet, dass** eines von dem ersten (10) und zweiten (12) Halteorgan eine Haltestange (14) aufweist und das andere von dem ersten (10) und zweiten (12) Halteorgan einen Haken (20) aufweist, der mit der Haltestange (14) koppelbar ist.

7. Flugzeugtür nach Anspruch 6, **dadurch gekennzeichnet, dass** der Haken (20) ein Rastelement (21) zum Halten der Haltestange (14) in dem Haken (20) aufweist.

8. Flugzeugtür nach einem der vorhergehenden Ansprüche, **dadurch gekennzeichnet, dass** das zweite Halteorgan (12) zwischen einer vorstehenden Position und einer zurückgezogenen Position beweglich ist, wobei die Rückzugsmittel dem zweiten Halteorgan (12) derart zugeordnet sind, dass die ausgelöste Position der Rückzugsmittel die vorstehende Position des zweiten Halteorgans (12) zur Folge hat und die nicht ausgelöste Position der Rückzugsmittel die zurückgezogene Position des zweiten Halteorgans (12) zur Folge hat.

9. Flugzeugtür nach Anspruch 8, **dadurch gekennzeichnet, dass** die Rückzugsmittel ein Gestell (22) und eine Schwenkachse (23), an der das zweite Halteorgan (12) schwenkbar zwischen seiner zurückgezogenen Position und seiner vorstehenden Position angebracht ist, aufweisen.

10. Flugzeugtür nach Anspruch 9, **dadurch gekennzeichnet, dass** die Rückzugsmittel ein elastisches Mittel (25) aufweisen, welches das zweite Halteorgan (12) in seine stabile vorstehende oder zurückgezogene Position zurückdrückt.

11. Flugzeugtür nach einem der vorhergehenden Ansprüche, **dadurch gekennzeichnet, dass** sie zwei Halteanordnungen (7) umfasst, die beiderseits des Öffnungselements (2) angeordnet sind.

12. Verfahren zum Öffnen der Flugzeugtür nach einem der vorhergehenden Ansprüche, **dadurch gekennzeichnet, dass** es die folgenden Schritte umfasst:
- Anbringen der Rückzugsmittel in der ausgelösten Position;
- Antreiben des Öffnungselements (2) in einer Öffnungsbewegung entlang eines ersten Weges, auf dem das erste Halteorgan (10) angetrieben wird, bis es auf das zweite Halteorgan (12) trifft;
- Fortsetzen der Öffnungsbewegung des Öffnungselements (2) entlang eines zweiten Weges, auf dem das erste Halteorgan (10) an das zweite Halteorgan (12) gekoppelt gehalten bleibt und sich von dem Träger (8) löst.

## Claims

1. An aircraft door comprising:
- a door frame (3), having a threshold portion to extend under a floor (5);
- a leaf (2) having an internal face intended to be turned toward the interior of the aircraft, the leaf (2) being movable with respect to the door frame (3) between a closed position and an open position;
- a deployable evacuation device (6) mounted on the leaf (2);
- retaining means comprising at least one retaining assembly (7) comprising a first retaining member (10) connected to the deployable evacuation device (6) and a second retaining member (12), couplable to the first retaining member (10), mounted on the door frame (3), said retaining means being designed to assume: an armed and engaged position, in which the first retaining member (10) of the retaining means is secured to the second retaining member mounted on the door frame (3), and a disarmed position, in which the first retaining member (10) of the retaining means is freely movable relative to the second retaining member (12) mounted on the door frame (3);
this aircraft door being **characterized in that** each retaining assembly (7) comprises:
- a beam (8) having a first end (9) fixed to the internal face of the leaf (2) and a second end (11) on which the first retaining member (10) is fixed in a detachable manner by a clip (16, 17), this beam (8) extending substantially perpendicularly to the leaf (2);
- retraction means (22, 23, 25) for retracting the second retaining member (12) that are movable between: a primed position, in which the second retaining member (12) protrudes from the floor (5) in the path of the first retaining member (10) when the leaf (2) passes from its closed position to its open position; and a deactivated position, in which the second retaining member (12) is retracted into the floor outside the path of the first retaining member (10) when the leaf (2) passes from its closed position to its open position.

2. The aircraft door as claimed in claim 1, **characterized in that** the leaf (2) comprises a door structure (18), and **in that** the beam (8) is fixed to the door structure (18).

3. The aircraft door as claimed in either one of the preceding claims, **characterized in that** the detachable clip has an elastically deformable fixing element (17) for fixing the first elastic member (10) to the beam (8).

4. The aircraft door as claimed in claim 3, **characterized in that** the detachable clip has a fixing receiving portion (16) on the beam (8) and also an elastic tab (17), and the first retaining member (10) has a fixing head (15) designed to be received in the fixing receiving portion (16) and to be held in place by the elastic tab (17).

5. The aircraft door as claimed in any one of the preceding claims, **characterized in that** the second retaining member (12) is mounted on a threshold portion (4) of the door frame (3).

6. The aircraft door as claimed in any one of the preceding claims, **characterized in that** one of the first (10) and the second (12) retaining member has a retaining bar (14) and the other of the first (10) and the second (12) retaining member has a hook (20) couplable to the retaining bar (14).

7. The aircraft door as claimed in claim 6, **characterized in that** the hook (20) has a pawl (21)for holding the retaining bar (14) in the hook (20).

8. The aircraft door as claimed in any one of the preceding claims, **characterized in that** the second retaining member (12) is movable between a protruding position and a retracted position, the retraction means being associated with the second retaining member (12) such that the primed position of the retraction means triggers the protruding position of the second retaining member (12), and the deactivated position of the retraction means triggers the retracted position of the second retaining member (12).

9. The aircraft door as claimed in claim 8, **characterized in that** the retraction means have a chassis (22) and a pivot pin (23) on which the second retaining member (12) is mounted pivotably between its retracted position and its protruding position.

10. The aircraft door as claimed in claim 9, **characterized in that** the retraction means have an elastic means (25) pushing the second retaining member (12) back into its stable protruding or retracted position.

11. The aircraft door as claimed in any one of the preceding claims, **characterized in that** it has two retaining assemblies (7) arranged on either side of the leaf (2).

12. A method for opening the aircraft door as claimed in one of the preceding claims, **characterized in that** it has the following steps:
- placing the retraction means in the primed position;
- driving the leaf (2) in an opening movement along a first travel in which the first retaining member (10) is driven until it meets the second retaining member (12);
- continuing the opening movement of the leaf (2) along a second travel in which the first retaining member (10) remains coupled to the second retaining member (12) and comes away from the beam (8).
